# EUROPEAN PATENT APPLICATION

(11) **EP 1 502 639 A1**
(43) Date of publication of application: **02.02.2005**
(21) Application number: 03715373.1
(22) Date of filing: 19.03.2003
(51) Int. Cl.: B01D 39/20

(54) **HONEYCOMB FILTER**

(30) Priority: 25.03.2002 JP 2002083710; 05.12.2002 JP 2002354051
(71) Applicant: NGK INSULATORS, LTD., Nagoya-shi Aichi 467-8530 (JP)
(72) Inventor: ITOU Motonari, NGK INSULATORS, LTD., Nagoya-shi, Aichi 467-8530 (JP); MIZUTANI, Takashi, NGK INSULATORS, LTD., Nagoya-shi, Aichi 467-8530 (JP)
(74) Representative: Paget, Hugh Charles Edward
(86) International application number: PCT/JP2003/003321
(87) International publication number: WO 2003/080218

(57) **Abstract**

There is disclosed a honeycomb filter 1 having: an inflow end face 42 and an outflow end face 44 of a fluid to be treated; porous partition walls 2 extending to the outflow end face 44 from the inflow end face 42; and a large number of through channels 3a and 3b partitioned by the partition walls 2 and extending through the outflow end face 44 from the inflow end face 42, predetermined through channels 3a are sealed in the inflow end face, and the remaining predetermined through channels 3b are sealed in the outflow end face 44. In a case where a total of sectional areas of the through channels 3a sealed in the inflow end face 42 is A (mm²), and a total of sectional areas of the through channels sealed 3b in the outflow end face is B (mm²), a relation is A < B in the honeycomb filter 1. The honeycomb filter has only slight increase of a pressure loss with an elapse of time by the use.

## Description

### Technical Field

The present invention relates to a porous honeycomb filter usable in filtering a gas, for example, to trap particulates in an exhaust gas from an internal combustion engine, a boiler and the like or in filtering liquids such as tap water/waste water, particularly to a honeycomb filter in which an increase of a pressure loss by the use is slight.

### Background Art

There has been an increasing need for removal of particulates or toxic substances in exhaust gases of an internal combustion engine, a boiler and the like from the exhaust gases in consideration of influences onto environments. Especially, regulations concerning the removal of particulate matters (hereinafter referred to as PM) exhausted from diesel engines have been strengthened in Western countries and Japan, and the use of a honeycomb structure filter in a trapping filter (hereinafter referred to as DPF) for removing the PM has attracted attentions. A honeycomb filter has also been used in filtering liquids such as city water/waste water (see Japanese Patent Application Laid-Open No. 4-301114, for example).

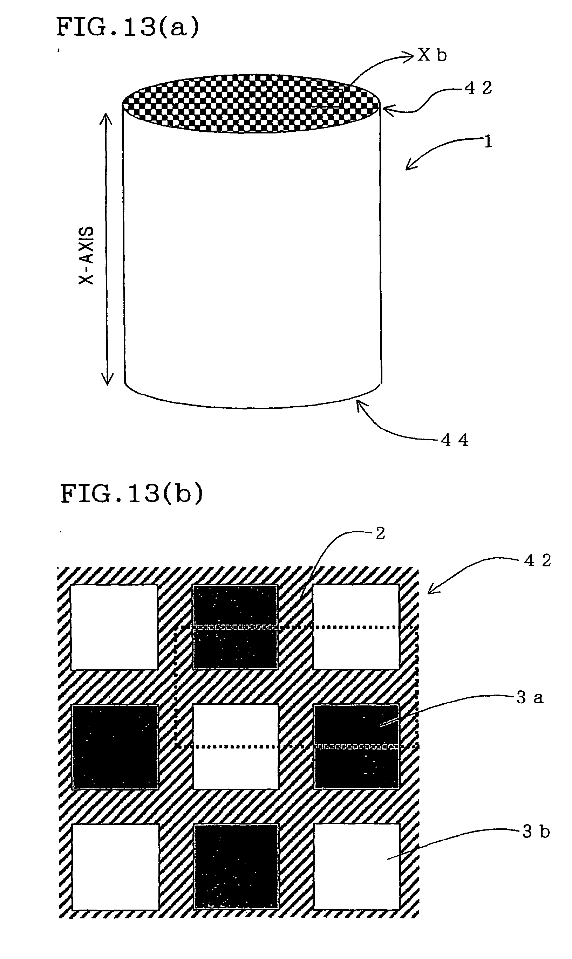

In general, as shown in FIG. 13(a), (b), a honeycomb filter for use in this purpose has: an inflow end face 42 and an outflow end face 44 of a fluid to be treated; partition walls 2 extending to the end face 44 from the end face 42; and a large number of through channels 3a and 3b partitioned by the partition walls 2, extending through the outflow end face 44 from the inflow end face 42, and having rectangular sectional shapes. The filter has a structure in which the adjacent through channels 3a and 3b are sealed by one end portion on opposite sides in such a manner that the end faces have checkered patterns. In the honeycomb filter having this structure, fluids to be treated such as a gas and a liquid flow in the through channels 3b opened in the inflow end face 42, that is, the through channels 3b sealed in the outflow end face 44, flow through the porous partition walls 2, and are discharged from the adjacent through channels 3a, that is, the through channels 3a sealed in the inflow end face 42 and opened in the outflow end face 44. In this case, the partition walls 2 function as filters, and trapped matters are deposited on the partition walls (see Japanese Patent Application Laid-Open No. 4-301114, for example).

When this filter is used, the pressure loss by filtering resistance has raised a problem, and there has been a demand for a filter having a small pressure loss. In general, when the filter is used, deposits are deposited on the filter with an elapse of time, and the pressure loss increases. Therefore, there has been a demand for a honeycomb filter in which the increase of the pressure loss by the change with the elapse of time is slight. Especially when the honeycomb filter is used in the DPF, outputs of the internal combustion engine are reduced and fuel consumption thereof is deteriorated by the increase of the pressure loss, and especially there has been a demand for a honeycomb filter in which the increase of the pressure loss with the elapse of time is slight.

### Disclosure of the Invention

The present invention has been developed in consideration of these circumstances, and an object thereof is to provide a honeycomb filter in which an increase of a pressure loss with an elapse of time by use is slight.

According to the present invention, there is provided a honeycomb filter having: an inflow end face and an outflow end face of a fluid to be treated; porous partition walls extending to the outflow end face from the inflow end face; and a large number of through channels partitioned by the partition walls and extending through the outflow end face from the inflow end face, predetermined through channels being sealed in the inflow end face, the remaining predetermined through channels being sealed in the outflow end face, characterized in that assuming that a total of vertical sectional areas of the through channels sealed in the inflow end face in a longitudinal direction is A (mm²), and a total of vertical sectional areas of the through channels sealed in the outflow end face in the longitudinal direction is B (mm²), a relation is A < B.

In the present invention, B described above is preferably in a range of (A×1.1) ≤ B ≤ (A×15) with respect to A. In a case where an average area per through channel sealed in the inflow end face in the vertical section of the through channel in the longitudinal direction is C (mm²/through channel), and an average area per through channel sealed in the outflow end face in the vertical sectional area is D (mm²/through channel), a relation of C < D is preferable. The through channels on the opposite sides via one partition wall are sealed in the end faces on the opposite sides, a vertical sectional shape of the through channel sealed in the inflow end face is preferably different from that of the through channel sealed in the outflow end face in the longitudinal direction, and a sectional shape of the partition wall in the vertical section of the through channel in the longitudinal direction is preferably constituted by repetition of a predetermined shape which is one unit. In a case where the total of sectional areas of the partition walls in vertical sections of the through channels in the longitudinal direction is E (mm²), a relation among A (mm²), B (mm²), and E (mm²) described above is preferably in a range of A:B:E = 4 to 30:32 to 57:7 to 64. In a case where an average thickness of the partition walls in the vertical sections of the through channels in the longitudinal direction is F (mm), a relation between D (mm²/through channel) and F (mm) described above is preferably D/F ≥ 5.5 (mm/through channel). A porosity of the partition wall is preferably 20% or more. A main component of the partition wall is preferably a ceramic and/or a metal, and the main component is further preferably one or two or more selected from the group consisting of cordierite, mullite, alumina, spinel, silicon carbide, silicon nitride, lithium aluminum silicate, aluminum titanate, Fe-Cr-Al-based metal, and metal silicon. The partition wall preferably carries a catalyst, a plurality of honeycomb structure segments are also preferably integrated, and the honeycomb filter is preferably used for trapping particulates exhausted from a diesel engine.

### Brief Description of the Drawings

FIG. 1(a) is a schematic perspective view showing one configuration of a honeycomb filter according to the present invention;
FIG. 1(b) is a schematic plan view showing one configuration of the honeycomb filter of the present invention;
FIG. 2 is an enlarged view of part II of FIG. 1(b);
FIG. 3 is a bottom view of a part corresponding to FIG. 2;
FIG. 4 is a partially enlarged schematic plan view showing another configuration of the honeycomb filter according to the present invention;
FIG. 5 is a partially enlarged schematic plan view showing still another configuration of the honeycomb filter according to the present invention;
FIG. 6 is a partially enlarged schematic plan view showing still another configuration of the honeycomb filter according to the present invention;
FIG. 7 is a partially enlarged schematic plan view showing still another configuration of the honeycomb filter according to the present invention;
FIG. 8 is a partially enlarged schematic plan view showing still another configuration of the honeycomb filter according to the present invention;
FIG. 9 is a partially enlarged schematic plan view showing still another configuration of the honeycomb filter according to the present invention;
FIG. 10 is a partially enlarged schematic plan view showing still another configuration of the honeycomb filter according to the present invention;
FIG. 11 is a partially enlarged schematic plan view showing still another configuration of the honeycomb filter according to the present invention;
FIG. 12 is a diagram showing a relation between a pressure loss and a PM deposited amount per unit filter area;
FIG. 13(a) is a schematic perspective view showing a conventional honeycomb filter, and FIG. 13(b) is a partially enlarged schematic plan view of an enlarged part Xb; and
FIG. 14 is a partially enlarged schematic plan view showing a conventional honeycomb filter.

### Best Mode for Carrying out the Invention

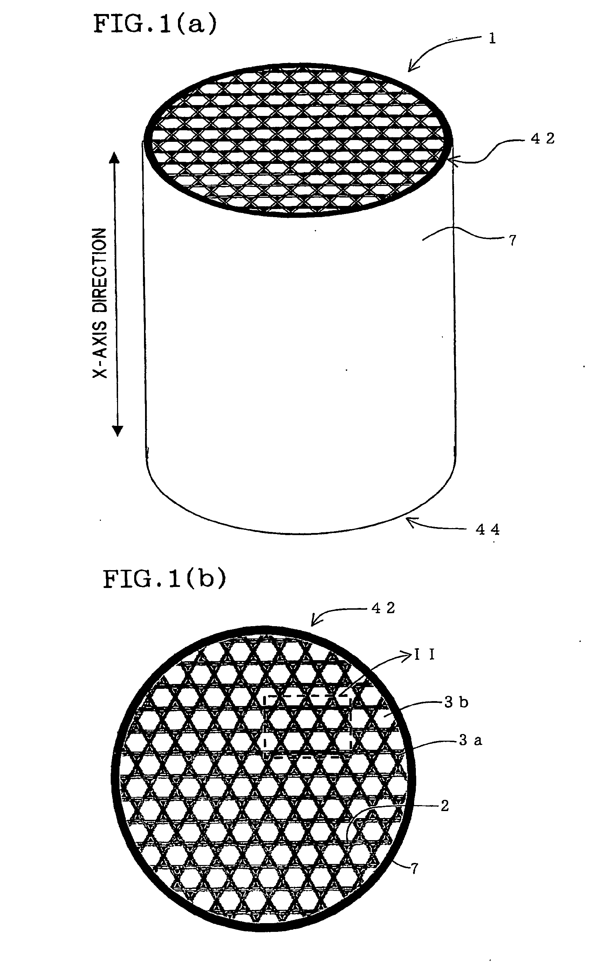

A honeycomb filter of the present invention will be described hereinafter in detail with reference to the drawings, but the present invention is not limited to the following embodiments. It is to be noted that in the following, a section means a vertical section of a through channel in a longitudinal direction (X-axis direction in FIG. 1(a)) unless especially mentioned.

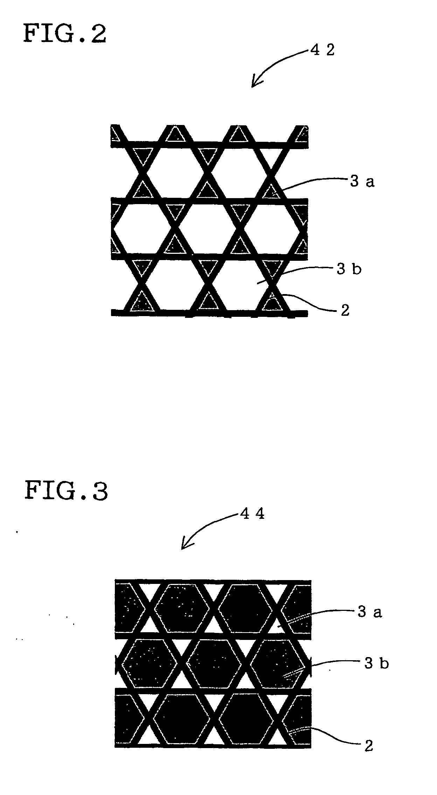

As shown in FIGS. 1(a), (b), the honeycomb filter of the present invention has: an inflow end face 42 and an outflow end face 44 of a fluid to be treated; porous partition walls 2 extending to the outflow end face 44 from the inflow end face 42; and a large number of through channels 3a and 3b partitioned by the partition walls 2 and extending through the outflow end face 44 from the inflow end face 42. Furthermore, as shown in FIGS. 2 and 3, predetermined through channels 3a are sealed in the inflow end face 42, and remaining predetermined through channels 3b are sealed in the outflow end face 44. It is to be noted that in FIGS. 1(a), (b) and the following drawings, blackened through channels indicate through channels sealed in the end face.

Important characteristics of the present invention are that, as shown in FIGS. 2 and 3, assuming that a total of sectional areas of the through channels 3a sealed in the inflow end face 42 is A (mm²), and a total of sectional areas of the through channels 3b sealed in the outflow end face 44 is B (mm²), there is a relation of A < B. In other words, the total of the sectional areas of the through channels into which the fluid to be treated flows is larger than that of the sectional areas of the through channels from which the fluid to be treated flows.

By this constitution, a surface area of the partition wall having a function of the filter can be enlarged, and a ratio of deposits deposited on the partition wall with respect to the surface area of the partition wall facing the through channel into which the fluid to be treated flows can be reduced. Accordingly, an increase of a pressure loss with an elapse of time during use of the honeycomb filter can be suppressed.

The present inventor has studied changes of the pressure loss with an elapse of time in detail by the use of various honeycomb filters for DPF, different from one another in cell density (the number of the through channels per unit sectional area) in a conventional structure shown in FIGS. 13(a) and (b). As a result, it has been found that the pressure loss largely depends on (attached weight of PM)/(surface area of partition wall), that is, a deposited thickness of the PM onto the partition wall. Moreover, it has been found that the sectional area of the through channel into which the fluid to be treated flows is set to be larger than that of the through channel from which the fluid to be treated flows, accordingly the surface area of the partition wall on which the PM is deposited can be enlarged unless the thickness of the partition wall is reduced, and the increase of the pressure loss with the elapse of time can be suppressed.

In the present invention, the relation of A<B, that is, a relation indicating that the total (B) of the sectional areas of the through channels into which the fluid to be treated flows is larger than the total (A) of the sectional areas of the through channels from which the fluid to be treated flows is an important characteristic. However, when a difference between A and B is excessively small, the effect of the present invention is not easily obtained. Therefore, the relation is preferably (A×1.1) ≤ B, further preferably (A × 1.3) ≤ B, especially preferably (A×1.5) ≤ B. When the difference between A and B is excessively large, a channel from which the fluid to be treated flows is substantially excessively small, and, as a result, an initial pressure loss is unfavorably excessively large. Therefore, B ≤ (A×15), further B ≤ (A×10), especially B ≤ (Ax6.5), further especially B ≤ (Ax2.5) are preferable.

Moreover, for example, in FIGS. 2 and 3, assuming that an average area of one through channel 3a sealed in the inflow end face 42 is C (mm²/through channel), and an average sectional area of one through channel 3b sealed in the outflow end face 44 is D (mm²/through channel), a relation of C < D is preferable. That is, the average sectional area of the through channel 3b into which the fluid to be treated flows is preferably larger than that of the through channel 3a from which the fluid to be treated flows, because the surface area of the partition wall can be enlarged. Even in this case, when a difference between C and D is excessively small, an effect of the present invention is not easily obtained, and therefore (C×1.1) ≤ D, further (C×1.3) ≤ D, especially (C×1.5) ≤ D are preferable. When a difference between C and B is excessively large, an initial pressure loss is excessively large, and therefore D ≤ (C×15), further D ≤ (C×10), especially D ≤ (Cx6.5), and further especially D ≤ (Cx2.5) are preferable.

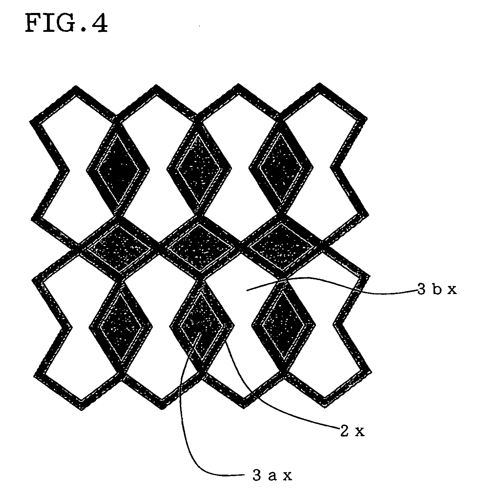

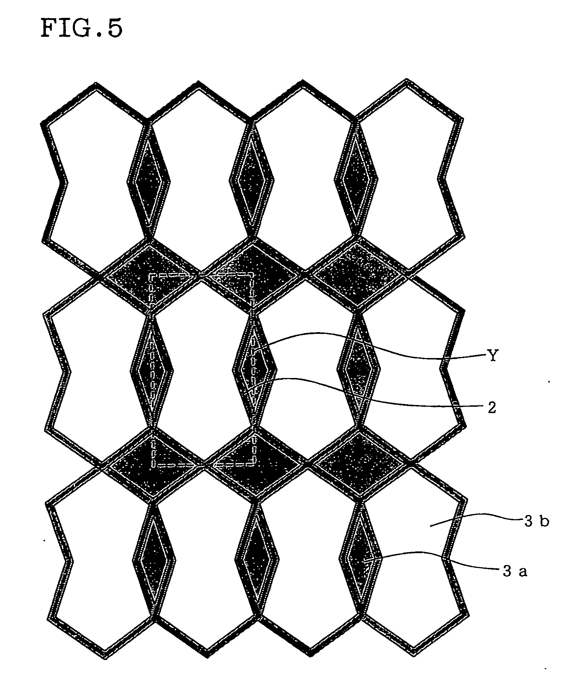

In a preferable configuration for obtaining the above-described constitution of the present invention, through channels 3ax and 3bx on the opposite sides via, for example, an optional one partition wall, that is, a partition wall 2x in FIG. 4 are sealed in end faces on the opposite sides. That is, 3ax is sealed in the inflow end face, and 3bx is sealed in the outflow end face, and a sectional shape of the through channel 3bx into which the fluid to be treated flows is different from that of the through channel 3ax from which the fluid to be treated flows in the configuration. By this configuration, the partition wall can be effectively used as the filter, and further the sectional area of the through channel into which the fluid to be treated flows can be enlarged. Furthermore, in the honeycomb filter of the present invention, a sectional shape of the partition wall is preferably a predetermined shape constituted by repetition of a shape in a dot-line frame shown by Y in FIG. 5 which is one unit. By this constitution, through channels having different sizes and shapes can be regularly combined, the adjacent through channels are sealed in the end face on the opposite sides, and the through channel into which the fluid to be treated flows can be constituted to have a large section.

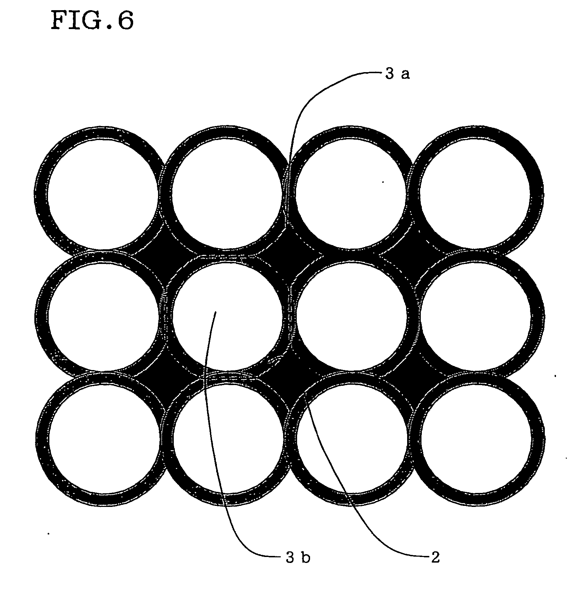

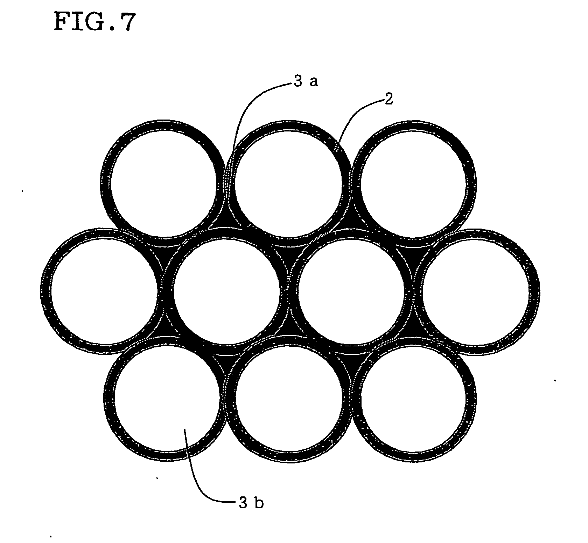

The sectional shape of the through channel for obtaining this configuration is not especially limited, but as a preferable configuration, for example, one or two or more through channels into which the fluid to be treated flows are formed into one or two predetermined shapes, adjacent one or two or more through channels from which the fluid to be treated flows are formed into one or two predetermined shapes, and the section of the honeycomb filter is formed by the repetition of the predetermined shapes. Concretely, examples of the configuration include: a configuration in which, as shown in FIG. 2, the through channel 3b is formed into a hexagonal shape, and the through channel 3a adjacent via the partition wall is formed into a triangular shape; a configuration in which, as shown in FIGS. 4 and 5, the through channel 3b is formed into a polygonal shape having a vertex having a concave inner angle, for example, an octagonal shape, and the through channel 3a adjacent via the partition wall is formed into a quadrangular shape; and a configuration in which, as shown in FIGS. 6 and 7, the through channel 3b is formed into a circular shape, and the through channel 3a adjacent via the partition wall is formed into a shape surrounded by four or three concave circular lines.

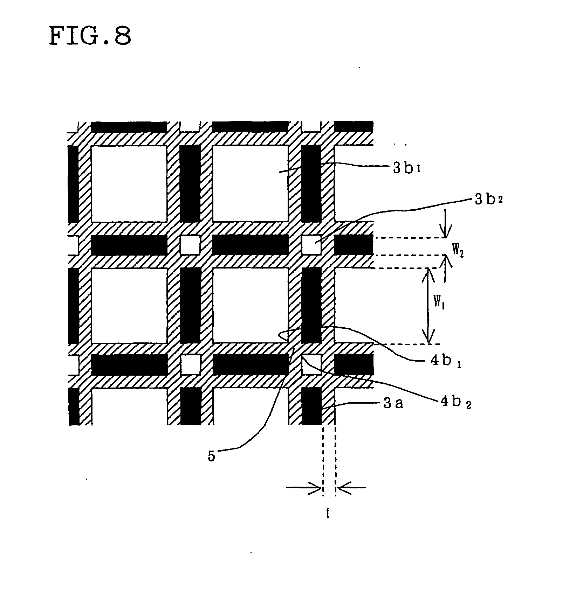

In a still another preferable configuration in the present invention, as shown in FIG. 8, the through channel has a quadrangular sectional shape, and the through channel 3b into which the fluid to be treated flows comprises a large through channel 3b₁ and a smaller through channel 3b₂. In an especially preferable configuration, a corner portion 4b₁ of the large through channel 3b₁ faces a corner portion 4b₂ of the small through channel 3b₂ via an intersecting portion 5 between the partition walls 2.

When the honeycomb filter is used in the DPF or the like, the PM and the like are accumulated on the inflow end face, bridging is caused, and the openings of the through channels into which the fluid to be treated flows are sometimes closed. If all the through channels are closed, a large problem occurs. As shown in FIG. 8, the through channels 3b₁ and 3b₂ into which the fluid to be treated flows are disposed in the different sizes, accordingly the through channel 3b₁ having a large opening can be disposed without lowering the whole cell density, and the closing can be effectively inhibited.

Moreover, in a diesel exhaust gas purification system using the DPF, a method has been proposed in which a catalyst for promoting combustion of the PM is contained in the exhaust gas, and the combustion of the PM accumulated in the DPF is promoted. In the method, a component (ash) derived from a catalyst component is deposited on the through channel into which the fluid to be treated flows. Unlike the PM, the ash is deposited on a sealed portion in the through channel. Therefore, a large volume of the through channel into which the fluid to be treated flows effectively inhibits the pressure loss by the deposited ash from being increased. Also in this respect, the honeycomb filter of the present invention is effective.

Moreover, the configuration shown in FIG. 8 is superior from a viewpoint of strength of the honeycomb filter. Furthermore, in the honeycomb structure, it is comparatively easy to prepare a die for performing extrusion forming, and the configuration also has an advantage that formability is also satisfactory.

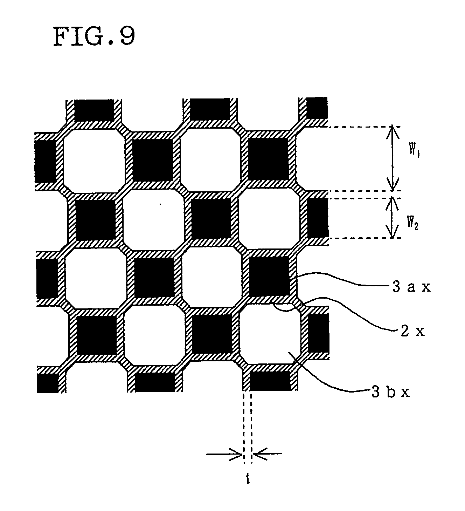

A still another preferable configuration in the present invention is shown in FIG. 9. In the configuration shown in FIG. 9, the sectional shape of the through channel from which the fluid to be treated flows is quadrangular, and a through channel 3bx which is adjacent to such through channel 3ax via the surface of a partition wall 2x and into which the fluid to be treated flows is formed into an octagonal shape. The configuration has advantages that the sectional area of the through channel into which the fluid to be treated flows can be enlarged, it is easy to prepare the die, and workability is also satisfactory.

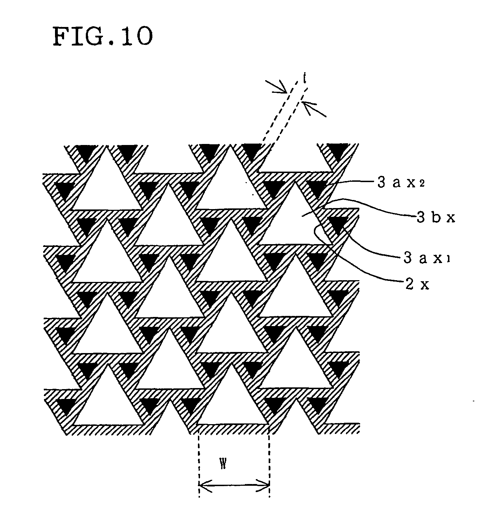

A still further preferable configuration in the present invention is shown in FIG. 10. In the constitution shown in FIG. 10, the sectional shape of the through channel is triangular, and two through channels 3ax₁ and 3ax₂ into which the fluid to be treated flows are disposed adjacent to each other via a partition wall 2x forming one surface of a through channel 3bx into which the fluid to be treated flows. This configuration is slightly inferior to the configuration s shown in FIGS. 8 and 9 in formability, but has advantages that the partition walls can be effectively used, and a filter area of the surface into which the fluid to be treated flows can be enlarged.

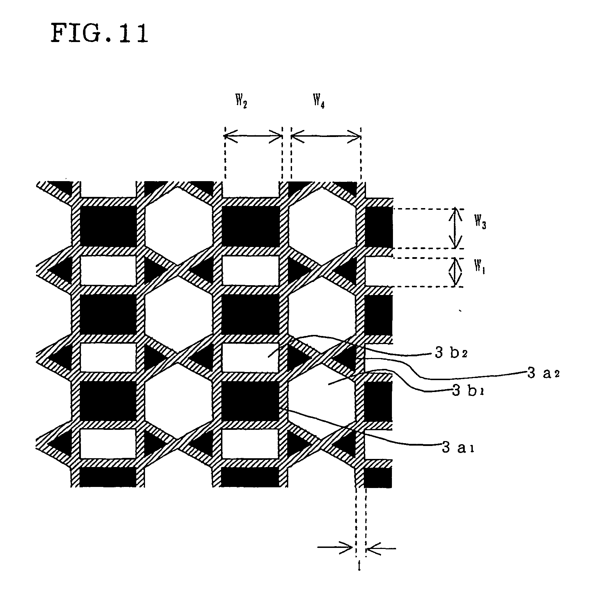

A still further preferable configuration in the present invention is shown in FIG. 11. The configuration shown in FIG. 11 comprises through channels 3b₁ and 3b₂ into which the fluid to be treated flows, having two types of sectional shapes which are hexagonal and quadrangular. The configuration comprises through channels 3a₁ and 3a₂ from which the fluid to be treated flows, having two types of sectional shapes which are quadrangular and triangular. Moreover, two through channels 3a₁ having quadrangular sections and four through channels 3a₂ having triangular sections, from which the fluid to be treated flows, are disposed adjacent to the through channel 3b₁ having a hexagonal section, into which the fluid to be treated flows, via a partition wall surface. Two through channels 3a₁ having quadrangular sections and two through channels 3a₂ having triangular sections, from which the fluid to be treated flows, are disposed adjacent to the through channel 3b₂ having a quadrangular section, into which the fluid to be treated flows, via the partition wall surface. The configuration is slightly inferior in the preparation of the die and the formability, but comprises the through channels having different sizes, into which the fluid to be treated flows, and therefore can comprise the through channels having large openings without lowering the whole cell density, and the through channels can be effectively inhibited from being closed.

It is to be noted that FIGS. 2 to 11 show concrete preferable configurations of the through channels, but all the through channels of the honeycomb filter do not have the configurations. Especially as shown in FIG. 1(b), the through channel of an outer peripheral portion has an incomplete shape in accordance with the sectional shape of the whole honeycomb filter, and therefore the above-described preferable configuration cannot be constituted in some case. Even in this case, an effect appears that the above-described preferable configuration occupies 30 vol% or more of all the sectional through channels. This ratio is further preferably 50 vol% or more, especially preferably 70 vol% or more in the above-described configuration.

An average cell density of the honeycomb filter of the present invention is not especially limited. However, when the average cell density is excessively small, a strength and effective geometric surface area (GSA) of the filter falls short. When the average cell density is excessively large, an initial pressure loss is excessively large unfavorably. Therefore, the cell density is in a range of preferably 6 to 2000 cells/square inch (0.9 to 311 cells/cm²), further preferably 50 to 1000 cells/square inch (7.8 to 155 cells/cm²), especially preferably 100 to 400 cells/square inch (15.5 to 62.0 cells/cm²).

In the present invention, the pressure loss is inhibited from being increased with an elapse of time, and it is also important to lower the initial pressure loss. The initial pressure loss largely depends on the sectional area of the through channel into which the fluid to be treated flows in the section of the honeycomb filter, that is, A (mm²), the sectional area of the through channel from which the fluid to be treated flows, that is, B (mm²), and the sectional area of the partition wall, that is, E (mm²). When the sectional area of the partition wall is small, the pressure loss is reduced, and the strength of the honeycomb filter drops. Therefore, A:B:E is in a range of preferably 4 to 30:32 to 57:7 to 64, more preferably 10 to 30:37 to 57:15 to 50, further preferably 15 to 30:42 to 57:25 to 45.

In the configuration shown in FIGS. 1(a) to 3 in the present invention, the sectional area per through channel into which the fluid to be treated flows is set to be equal to that in a conventional filter shown in FIG. 13(b), and the sectional area of the through channel from which the fluid to be treated flows is set to be smaller. In this case, when a thickness of the partition wall is set to be equal to that of the conventional partition wall, a ratio of the sectional area of the partition wall to the sectional area of the whole filter becomes relatively large. Therefore, to obtain a strength equal to that of the conventional filter, the thickness of the partition wall can be reduced, and the initial pressure loss can be lowered. Therefore, in the configuration, a value obtained by dividing the sectional area per through channel into which the fluid to be treated flows, that is, D (mm²/through channel) by an average thickness of the partition wall in the section, that is, F (mm) is preferably 5.5 (mm/through channel) or more, more preferably 6.0 (mm/through channel) or more, and further preferably 6.5 (mm/through channel) or more.

An absolute value of the thickness of the partition wall in the present invention is not especially limited. When the partition wall is excessively thick, the initial pressure loss during the passage of the fluid to be treated through the porous partition wall is excessively large. When the partition wall is excessively thin, the strength falls short unfavorably. The thickness of the partition wall is in a range of preferably 30 to 2000 µm, further preferably 40 to 1000 µm, especially preferably 50 to 750 µm. Moreover, an outer peripheral wall 7 shown in FIG. 1(a) is preferably thicker than the partition walls 2 from a viewpoint of the strength of the honeycomb filter, and the thickness is in a range of preferably 45 to 6000 µm, further preferably 60 to 4000 µm, especially preferably 75 to 2000 µm. It is to be noted that the outer peripheral wall may be not only an integrally formed wall formed integrally with the partition wall at the time of the forming but also a cement coated wall formed by grinding an outer periphery into a predetermined shape after the forming and forming the outer peripheral wall with cement or the like.

The partition wall of the honeycomb filter of the present invention is porous, but a pore diameter of the partition wall is not especially limited, and a person skilled in the art can appropriately select the diameter in accordance with an application. In general, the pore diameter can be selected in accordance with viscosity of the fluid to be treated and an object to be separated. For example, for use in the DPF, an average value is preferably about 1 to 100 µm. For use in purification of water, the value is preferably about 0.01 to 10 µm.

In the present invention, porosity is important, and largely influences the initial pressure loss. When the porosity is excessively small, the initial pressure loss is unfavorably excessively large. For example, the porosity for use in the DPF is preferably 20% or more, more preferably 30% or more, further preferably 40% or more. In the present invention, a configuration in which the thickness of the partition wall is reduced to raise the porosity is a preferable configuration from a viewpoint of reduction of the initial pressure loss. For example, the thickness of the partition wall is preferably 0.5 mm or less, more preferably 0.45 mm or less, further preferably 0.4 mm or less, and the porosity is preferably 30% or more, more preferably 40% or more. On the other hand, when the porosity is excessively large, the strength falls short, an therefore the porosity is preferably 90% or less. Furthermore, with the use as a filter in which the pressure loss has to be lowered, such as a filter of such a system that the catalyst is carried and particulates are continuously burnt, the porosity is in a range of preferably 30 to 90%, further preferably 50 to 80%, especially preferably 50 to 75%. With the use of the honeycomb filter of the present invention in a system in which a catalyst for promoting the combustion of the PM is contained in the exhaust gas, a dense and highly strong material is required in such a manner as to withstand a large stress generated at the time of the PM combustion. The porosity of the material is preferably 20 to 80%, further preferably 25 to 70%, especially preferably 30 to 60%. It is to be noted that in the present invention the porosity means vol%.

In the present invention, the material constituting the honeycomb filter is not especially limited, but main components are preferably various ceramics, metals and the like of oxide or non-oxide from viewpoints of strength, heat resistance, durability and the like. Concretely, for example, cordierite, mullite, alumina, spinel, silicon carbide, silicon nitride, lithium aluminum silicate, aluminum titanate and the like are considered. As the metals, an Fe-Cr-Al-based metal, metal silicon and the like are considered. One or two or more selected from them are preferably used as the main components. Further from viewpoints of high strength, high heat resistance and the like, the main component is preferably one or two or more selected from the group consisting of alumina, mullite, lithium aluminum silicate, cordierite, silicon carbide, and silicon nitride, and from viewpoints of thermal conductivity and heat resistance, silicon carbide or a silicon-silicon carbide compound material is especially suitable. Here, the "main component" means constitution of 50% by mass or more, preferably 70% by mass or more, further preferably 80% by mass or more.

The material of a sealing portion formed by sealing the through channel is not especially limited, but the material preferably contains one or two or more ceramics and/or metals selected from the ceramics and metals described above as preferable for the partition wall of the honeycomb filter.

To remove the deposits deposited on the honeycomb filter of the present invention, for example, a metal and the like having a catalytic capability. Especially with the use of the honeycomb filter as the DPF, to burn the PM trapped in the honeycomb filter and to regenerate the honeycomb filter, a catalyst having a capability of promoting the combustion of the PM is preferably contained. Concrete examples of the catalyst include Pt, Pd, Rh and the like, and at least one of them is preferably carried by the honeycomb filter.

The honeycomb filter of the present invention is also preferably constituted of a plurality of integrated segments, or has slits. When the filter is divided into a plurality of segments and then integrated, or the slits are formed therein, the thermal stress can be dissipated and cracks by the thermal stress can be prevented. In the case where the honeycomb filter is segmented and then integrated, a size or shape of each segment is not especially limited. However, when each segment is excessively large, an effect of preventing the cracks by segmentation cannot be sufficiently fulfilled. When the segment is excessively small, the manufacturing of the respective segments or the integrating by bonding unfavorably becomes laborious. As a preferable size of the segment, a sectional area is 900 to 10000 mm², further preferably 900 to 5000 mm², most preferably 900 to 3600 mm², and 70% by volume or more of the honeycomb filter is preferably constituted of the honeycomb segments each having this size. As a preferable shape of the segment, for example, the sectional shape is quadrangular. That is, a square pole shape of the segment is regarded as a basic shape, and the shape of the segment on an outer peripheral side can be appropriately selected in accordance with the shape of the integrated honeycomb filter. The whole sectional shape of the honeycomb filter is not especially limited, and the shape is not limited to the circular shape shown in FIG. 1(b). In addition to an elliptic shape, for example, a race track shape, schematically circular shapes such as an elongated shape, a quadrangular shape, and polygonal shapes such as a hexagonal shape may be formed.

A method of manufacturing the honeycomb filter of the present invention is not especially limited, but the filter can be manufactured by the following method.

As a raw material powder of the honeycomb filter, a material selected from the above-described preferable materials, for example, silicon carbide powder is used, binders such as methyl cellulose and hydroxypropoxyl methyl cellulose are added, further a surfactant and water are added, and plastic clay is prepared. By extrusion of the clay, a formed body of a honeycomb structure having the above-described predetermined sectional shapes of the partition walls and through channels is obtained. This body is dried, for example, by microwaves and hot air. Thereafter, the adjacent through channels are sealed with materials similar to those used in manufacturing the honeycomb filter in one end portion on the opposite sides. Further after drying the body, the body is heated/degreased, for example, in a nitrogen atmosphere, and therefore fired in an inactive atmosphere of argon or the like, so that the honeycomb filter of the present invention can be obtained. A firing temperature and a firing atmosphere differ with raw materials, and a person skilled in the art can select the firing temperature and atmosphere appropriate for the selected ceramic raw material.

To form the honeycomb filter into a constitution in which a plurality of segments are integrated, after obtaining the segments in the above-described method, the obtained segments are bonded using, for example, ceramic cement, and dried/hardened, so that the honeycomb filter can be obtained. A method of allowing the honeycomb filter manufactured in this manner to carry the catalyst may be a method usually performed by the person skilled in the art. For example, when a catalyst slurry is wash coated, dried, and fired, the catalyst can be carried.

Next, the present invention will be described more concretely based on concrete examples.

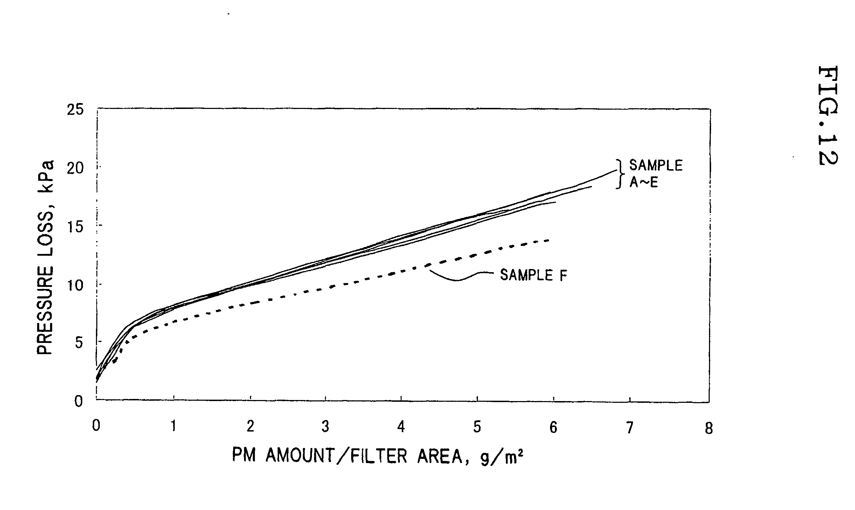

Honeycomb filters A to F were prepared having a cylindrical shape with a diameter 144 mm x length 152 mm, including through channels whose sectional shapes were square as shown in FIG. 13(b), adjacent through channels being sealed in end face on the opposite sides, and having cell densities, cell pitches p, and partition wall thicknesses t shown in Table 1. A result of calculation of the area of the partition wall surface facing the through channel 3b of each of the filters is shown as a filter area in Table 1. These honeycomb filters were attached to an exhaust tube of a diesel engine, and deposited amounts of PM in the honeycomb filters, and pressure losses were measured. The pressure loss and the PM deposited amount per unit filter area are shown in FIG. 12. It is seen from FIG. 12 that with the equal partition wall thickness, a tilt of a pressure loss increase is substantially constant, and the pressure loss increases directly depending on the PM deposited amount per unit filter area. Therefore, it is seen that when a filter area is increase, the pressure loss can be inhibited from being increased.

**(Table 1)**

| Honeycomb filter | Partition wall thickness t(mm) | Cell density (cells/cm²) | Cell pitch p(mm) | Filter area (m²) |
|---|---|---|---|---|
| A | 0.384 | 32.2 | 1.76 | 2.05 |
| B | 0.389 | 31.0 | 1.80 | 2.02 |
| C | 0.384 | 38.0 | 1.62 | 2.18 |
| D | 0.371 | 39.4 | 1.59 | 2.23 |
| E | 0.376 | 47.1 | 1.46 | 2.35 |
| F | 0.302 | 47.3 | 1.45 | 2.52 |

Here, the sectional shape of the through channel was formed into a shape obtained by combining hexagonal and triangular shapes shown in FIG. 2, and the partition wall thickness, cell density, and diameter of the whole honeycomb filter were set to be equal to those of Honeycomb Filter A to obtain Honeycomb Filter G. As a result of calculation, the filter area was 3.11 m². Therefore, as compared with Honeycomb Filter A, the filter area of Honeycomb Filter G can be enlarged by about 1.52 times. Therefore, it is seen that an increase ratio of the pressure loss of Honeycomb Filter G can be reduced to 1/1.52 as compared with conventional Honeycomb Filter A.

With respect to the configurations shown in FIGS. 8 to 11, results of study of an effective use of the partition walls, strength, ease of preparing the die, ease of forming, and ash deposited volume are shown in Table 2. It is to be noted that from viewpoints of the strength, ease of preparing the die, and formability, the section of the partition wall preferably has a linear shape rapture than a curved shape such as a circle.

**(Table 2)**

| Embodiment | FIG. 8 | FIG. 9 | FIG. 10 | FIG. 11 |
|---|---|---|---|---|
| Effective use of partition wall | High | Medium | High | High |
| Strength of honeycomb filter | High | Low | Low | Low |
| Ease of preparing die | High | High | Medium | Medium |
| Ease of forming | High | High | Medium | Medium |
| Ash deposited volume | Medium | Medium | High | High |

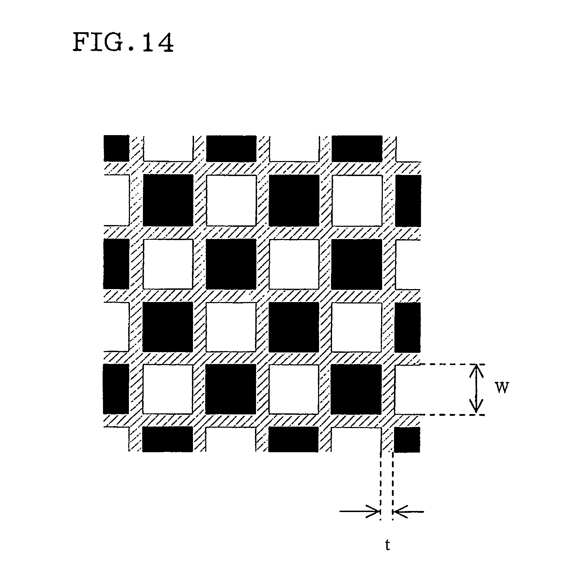

Furthermore, in a conventional configuration shown in FIG. 14, a constitution substantially corresponding to a configuration having a thickness (t) of the partition wall of 15 mil (0.381 mm) and a cell density of 200 cells/square inch (31.1 cells/cm²), the strength and formability were considered, and concrete dimensions were calculated based on the configurations shown in FIGS. 8 to 11. Table 3 shows the results. From viewpoints of the deposited volume of the as, and the opening of the through channel prevented from being closed, even when a ratio of a sectional area B of the through channel into which the fluid to be treated flows to a sectional area A of the through channel from which the fluid to be treated flows is small as shown in Table 3, a sufficient effect is obtained. Considering the strength, ease of preparing the die, formability, and initial pressure loss, a range of (A×1.1) s B s (A×6.5), further (A×1.1) ≤ B ≤ (Ax2.5) is also a preferable range.

**(Table 3)**

| Embodiment | FIG. 14 (conventional example) | FIG. 8 | FIG. 9 | FIG. 10 | FIG. 11 |
|---|---|---|---|---|---|
| Partition wall thickness t(mm) | 0.381 | 0.381 | 0.381 | 0.285 | 0.381 |
| Inflow through channel sectional shape | Square | Square | Octagonal | Regular triangle | Hexagonal, quadrangular |
| Outflow through channel sectional shape | Square | Square | Rectangular | Regular triangle | Triangular, quadrangular |
| Length of one side (mm) | W:1.419 | W₁:2.238 | W₁:1.145 | W:2.300 | W₁:1.267 |
| | | W₂:0.600 | W₂:0.806 | | W₂:2.350 |
| | | | | | W₃:1.648 |
| | | | | | W₄:2.854 |
| A:B | 1:1 | 1:2 | 1:2 | 1:6:2 | 1:2 |

### Industrial Applicability

As described above, in a honeycomb filter of the present invention, a sectional area of a through channel into which a fluid to be treated flows is larger than that of an outflow through channel. Therefore, even when other conditions including a partition wall thickness and the like are set to be equal, a filter area can be enlarged, and a pressure loss can be inhibited from being increased with an elapse of time. It is to be noted that in the present invention, mainly a honeycomb filter for a DPF has been described as an example. In the present invention, the filter area is increased, a sectional area and a volume of the through channel into which the fluid to be treated flows are enlarged, and the pressure loss is inhibited from being increased with the elapse of time. Needless to say, the present invention can be applied to honeycomb filters other than the DPF.

## Claims

1. A honeycomb filter having: an inflow end face and an outflow end face of a fluid to be treated; porous partition walls extending to the outflow end face from the inflow end face; and a large number of through channels partitioned by the partition walls and extending through the outflow end face from the inflow end face, predetermined through channels being sealed in the inflow end face, the remaining predetermined through channels being sealed in the outflow end face,
**characterized in that** assuming that a total of vertical sectional areas of the through channels sealed in the inflow end face in a longitudinal direction is A (mm²), and a total of vertical sectional areas of the through channels sealed in the outflow end face in the longitudinal direction is B (mm²), a relation is A < B.

2. The honeycomb filter according to claim 1, wherein B described above is in a range of (A×1.1) ≤ B ≤ (A×15) with respect to A.

3. The honeycomb filter according to claim 1 or 2, wherein assuming an average area per through channel sealed in the inflow end face in the vertical section of the through channel in the longitudinal direction is C (mm²/through channel), and an average area per through channel sealed in the outflow end face in the vertical sectional area is D (mm²/through channel), a relation is C < D.

4. The honeycomb filter according to any one of claims 1 to 3, wherein the through channels on the opposite sides via one partition wall are sealed in the end faces on the opposite sides, and a vertical sectional shape of the through channel sealed in the inflow end face is different from that of the through channel sealed in the outflow end face in the longitudinal direction.

5. The honeycomb filter according to claim 4, wherein a sectional shape of the partition wall in the vertical section of the through channel in the longitudinal direction is constituted by repetition of a predetermined shape which is one unit.

6. The honeycomb filter according to any one of claims 1 to 5, wherein assuming that the total of sectional areas of the partition walls in vertical sections of the through channels in the longitudinal direction is E (mm²), a relation among A (mm²), B (mm²), and E (mm²) described above is in a range of A:B:E = 4 to 30:32 to 57:7 to 64.

7. The honeycomb filter according to any one of claims 1 to 6, wherein assuming that an average thickness of the partition walls in the vertical sections of the through channels in the longitudinal direction is F (mm), a relation between D (mm²/through channel) and F (mm) described above is D/F ≥ 5.5 (mm/through channel).

8. The honeycomb filter according to any one of claims 1 to 7, wherein a porosity of the partition wall is 20% or more.

9. The honeycomb filter according to any one of claims 1 to 8, wherein a main component of the partition wall is a ceramic and/or a metal.

10. The honeycomb filter according to claim 9, wherein the main component is one or two or more selected from the group consisting of cordierite, mullite, alumina, spinel, silicon carbide, silicon nitride, lithium aluminum silicate, aluminum titanate, Fe-Cr-Al-based metal, and metal silicon.

11. The honeycomb filter according to any one of claims 1 to 10, wherein the partition wall carries a catalyst.

12. The honeycomb filter according to any one of claims 1 to 11, wherein a plurality of honeycomb structure segments are preferably integrated.

13. The honeycomb filter according to any one of claims 1 to 12, for use in trapping particulates exhausted from a diesel engine.
